# EUROPEAN PATENT APPLICATION

(11) **EP 1 990 323 A2**
(43) Date of publication of application: **12.11.2008**
(21) Application number: 07425544.9
(22) Date of filing: 30.08.2007
(51) Int. Cl.: C03B 33/027

(54) **Glass cutting table.**

(30) Priority: 24.10.2006 IT CH20060039
(71) Applicant: Cericola, Carlo, 66020 Paglieta (CH) (IT)
(72) Inventor: Cericola, Carlo, 66020 Paglieta (CH) (IT)

(57) **Abstract**

The invention is related to a glass cutting device, so called cutting table, using linear motors for movement of mechanical structures on X and Y axis.

## Description

The invention is related to a glass cutting device, so called cutting table, using linear motors for movement of mechanical structures on X and Y axis.

### TECHNICAL ASPECTS and PHYSICAL FUNCTIONING LAW

Nowadays existing glass cutting devices are using rotative motors for engraving/cutting/breaking mechanical structures' movement.

The traditional rotative motor needs a gear unit and a dedicate system transforming the movement from rotative to linear, for example a toothed belt or a gear rack. This fact makes the system so complex and encumbering, above all this introduces mechanical clearances and in consequence, the possibility of having less accuracy. Speed and acceleration are even limited.

### INVENTION'S AIM

Higher and higher production' volumes are required, this is why, faster movements in production' phases are needed. In addition it is important to reduce the unproductive times introducing more and more precise synchronisms.

The invention's aim is to use a movement' system of engraving/cutting/breaking mechanical structures on X and Y axis in the glass cutting devices, so called "cutting tables", using a linear motors' system.

The industrial linear motor, which is a multifunctional component, is particularly suitable for dynamic tasks such as machine' sliding systems' position.

The difference between these 2 technologies is clear, you should consider that the maximum movement' speed of an industrial linear motor is more than 4 m/s; up to 3 times faster than a conventional pneumatic cylinder.

Moreover the industrial linear motors don't include parts as gaskets, which are eager to wear, this is why their working life is about 100 times longer than the pneumatic cylinder's one.

Industrial linear motors allow to project and realize extremely simples and compact machines even for complicated movement' task.

The employment of linear motors for the device' structures movement on X and Y axis in shape cut is necessary because this kind of cut needs an high precision level for cut structures' movement.

### ADVANTAGES

- Considerable decrease of working times compared to the other methods nowadays used on the market. As a matter of fact, the glass cutting working cycle is remarkably reduced.
- Removal of mechanisms and hydraulic circuits in addition with simplification of the transmission chains and movement's transformation; consequent frictions and maintenance's problems decrease.
- High performances linked to the speed, acceleration, precision and possibility to introduce sensorless checking techniques
- Extremely ease in device assembling and consequent decrease of production' costs and improvement of production efficiency.
- Best employment of available rooms.
- Reduction of mechanical alignment' problems.
- High energetic efficiency.
- Increasing reliability and emproving positioning accuracy.
- Increasing operating flexibility which allow to realize production' systems able to adapt themselves to the cut's features such as shape and dimensions.
- Extremely high speed and acceleration, unequalled positioning precision and complete functioning fluidity even with low speed make the linear motor essential for glass shape cut.

### The invention is described in detail with the help of pictures showing an execution example.

### Pict. 1 shows the schematic view of the device, formed by:

- glass cutting table 1
- linear motors for cutting table movement 2
- bridge carriage with cutting system 3
- linear motor for cutting carriage movement 4
- cutting system 5

### DYNAMICS' DESCRIPTION

First of all you have to program the device with glass cutting operations to carry out; after that, the bridge carriage endowed with the engraving system moves along the Y axis thanks to a linear motor.

The cutting table on which the glass sheet positioned, moves along the X axis thanks to 1 or more linear motors.

### FULFILMENT'A ALTERNATIVES

Following further alternatives, that is fulfilment's ways concerning the described solution (claimed by us), the device may be realized with technical and mechanical equivalents or enriched with further integrative particulars and also the realization of the elements may vary to suit the goal.

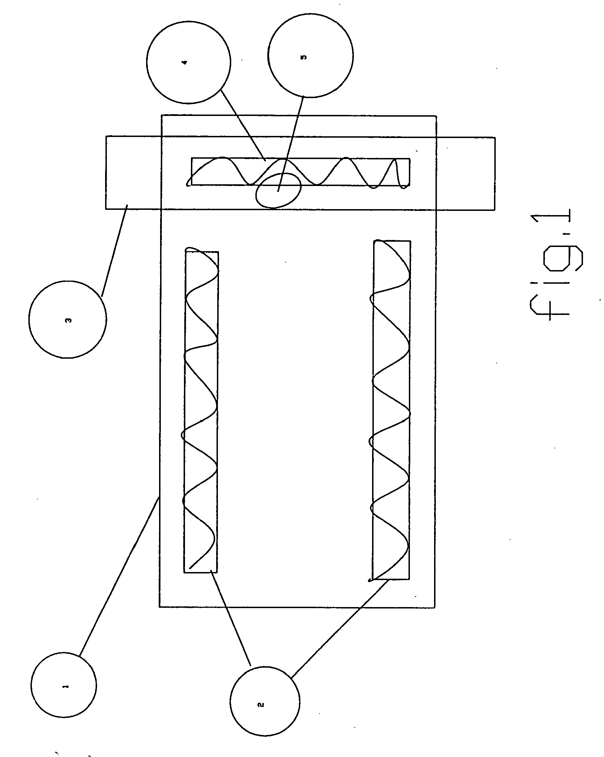

## Claims

1. The device for engraving/cutting/breaking glass, so called

2. cutting table, using the linear motor for bridge carriage movement along the Y axis.

3. The device for engraving/cutting/breaking glass , so called cutting table, using one or more linear motors for the cutting table movement along the X axis.

4. The device for engraving/cutting/breaking glass, so called cutting table, using linear motors for cutting table movement along the X axis and the movement of cutting system bridge carriage along Y axis.
